# EUROPÄISCHE PATENTSCHRIFT

(11) **EP 2 095 076 B1**
(45) Veröffentlichungstag und Bekanntmachung des Hinweises auf die Patenterteilung: **05.08.2015**
(21) Anmeldenummer: 06819668.2
(22) Anmeldetag: 22.11.2006
(51) Int. Cl.: G01C 21/34, G01C 21/30

(54) **VERFAHREN ZUR LOKALISIERUNG EINES STRECKENABSCHNITTS IN EINER KARTE**
METHOD FOR LOCALIZING A PATH SECTION IN A MAP
PROCÉDÉ DE LOCALISATION D'UNE PARTIE D'ITINÉRAIRE SUR UNE CARTE

(43) Veröffentlichungstag der Anmeldung: 02.09.2009
(73) Patentinhaber: Robert Bosch GmbH, 70442 Stuttgart (DE)
(72) Erfinder: PFEIFFER, Heinz-Werner, 31249 Hohenhameln (DE); WARTENBERG, Maylin, 38114 Braunschweig (DE)
(86) Internationale Anmeldenummer: PCT/EP2006/068759
(87) Internationale Veröffentlichungsnummer: WO 2008/061561

(56) Entgegenhaltungen:
- EP-A- 1 719 976
- US-A1- 2005 049 783

## Beschreibung

Die vorliegende Erfindung betrifft ein Verfahren zur Lokalisierung eines bestimmten Streckenabschnitts aus einer ersten digitalisierten Karte eines Verkehrswegenetzes in einer zweiten digitalisierten Karte des Verkehrswegenetzes.

Als Grundlage für eine Fahrzeugnavigation greifen Navigationssysteme auf digitalisierte Karten des Verkehrswegenetzes bzw. Straßennetzes zu. Diese Karten sind nicht standardisiert, so dass es bei Karten unterschiedlicher Hersteller zu Abweichungen in der digitalisierten Karteninformation kommen kann.

Bei einer heutzutage üblichen dynamischen Navigation wird von dem Navigationssystem aufgrund empfangener Verkehrsdaten zu der aktuellen Verkehrslage die bereits berechnete Route überprüft bzw. unter Berücksichtigung der veränderten Verkehrssituation neu berechnet. Die Verkehrsdaten sind üblicherweise bestimmten Streckenabschnitten des Verkehrswegenetzes zugeordnet, um eine Lokalisierung zu ermöglichen. Das Navigationssystem muss nun den lokalisierten Streckenabschnitt in der ihm zur Verfügung stehenden Karte eindeutig lokalisieren, um die empfangene Verkehrsmeldung bei der Routenberechnung berücksichtigen zu können. Diese Lokalisierung wird auch mit Referenzierung bezeichnet.

Bei der Referenzierung von Teilen des Verkehrswegenetzes werden im Wesentlichen Koordinaten von (Shape-) Punkten der Streckenabschnitte auf einer Encoder-Seite codiert, die eine erste digitalisierte Karte aufweist, und zusammen mit bestimmten Attributen an das Decoder-System übertragen, das auf eine zweite digitalisierte Karte zugreift. Anhand dieser Koordinaten und Attribute wird der entsprechende Streckenabschnitt auf der Decoder-Seite identifiziert. Diese zu übertragenden Koordinaten werden teils äquidistant und teils mit Hilfe bestimmter Algorithmen, beispielsweise dem Douglas-Peuker-Algorithmus, ausgewählt. Zum Decodieren wird dann eine Korrelation mit den Daten der Empfängerkarte berechnet, wobei die übertragenen Koordinaten in einem bestimmten Rahmen verschoben werden. Bei einem Maximum wird eine korrekte Verschiebung angenommen, welche anhand der Attribute verifiziert wird. Somit ist eine eindeutige Identifizierung des Streckenabschnitts ermöglicht. Sieche z.B. EP 17 19 976.

Ohne die Verwendung weiterer Attribute ist die Decodierung oft unzureichend, da beispielsweise Parallelfahrbahnen nicht unterschieden werden können. Aber auch mit Berücksichtigung weiterer Attribute, wie der Fahrtrichtung und ähnlichen, kann oft kein eindeutiges Maximum bestimmt werden. Zusätzlich erhöht ein Routen durch die korrelierten Punkte die Laufzeit des Decoders. Dies ist aber erforderlich, da beim Korrelieren der Punkte im ersten Schritt die Topologie nicht berücksichtigt werden kann. Folglich kann es vorkommen, dass eigentlich benachbarte Punkte auf verschiedene Straßen des Straßennetzes fallen. Des Weiteren wird die Datenmenge bei vielen zu übertragenen Punkten schnell recht groß, mehrere Punkte sind jedoch bei einigen Straßen für die korrekte Identifikation unabdingbar.

Ein Verfahren gemäß dem Oberbegriff des Anspruchs 1 ist aus der US 2005/0049783 A1 bekannt.

Daher ist es die Aufgabe der vorliegenden Erfindung, ein verbessertes Verfahren zum Identifizieren der korrekten Streckenabschnitte in einer digitalisierten Karte bereitzustellen.

Die Aufgabe wird durch ein Verfahren mit den Merkmalen gemäß Anspruch 1 gelöst.

Erfindungsgemäß wird bei einem gattungsgemäßen Verfahren ein Ursprungswurzelpunkt in Bezug auf den Streckenabschnitt in der ersten Karte festgelegt und die Koordinaten dieses Ursprungswurzelpunktes bestimmt. Ausgehend von dem Ursprungswurzelpunkt wird eine Ursprungsbaumstruktur aus mehreren Ästen erzeugt, auf denen Baumpunkte derart angeordnet sind, dass sie jeweils einem Punkt eines Verkehrsweges in der ersten Karte entsprechen. Ein Referenzwurzelpunkt wird in der zweiten Karte in der Nähe der Koordinaten des Ursprungswurzelpunktes festgelegt und in ähnlicher Weise eine Referenzbaumstruktur ausgehend von dem Referenzwurzelpunkt aus mehreren Ästen erzeugt, auf denen Baumpunkte derart angeordnet sind, dass sie jeweils einem Punkt eines Verkehrswegs in der zweiten Karte entsprechen. Die Ursprungsbaumstruktur und die Referenzbaumstruktur werden miteinander verglichen und es wird ein weiterer Referenzwurzelpunkt zur Erzeugung einer weiteren Referenzbaumstruktur festgelegt, bis eine bestimmte Übereinstimmung der Referenzbaumstruktur mit der Ursprungsbaumstruktur erzielt wird. Anschließend wird der Streckenabschnitt in Bezug auf den Referenzwurzelpunkt in der zweiten Karte anhand des Bezugs des Streckenabschnitts zu dem Ursprungswurzelpunkt in der ersten Karte bestimmt.

Durch die Bildung der Baumstruktur wird der entsprechende Ausschnitt des Verkehrswegenetzes in der ersten Karte, das den zu suchenden Streckenabschnitt enthält, in einer von den Kartendaten gelösten und abstrahieren Darstellung abgebildet. Geringfügige Abweichungen des Verkehrswegenetzes in den unterschiedlichen digitalisierten Karten bewirken somit nur eine minimale Veränderung der jeweiligen Baumstruktur. Da eine exakt gleiche Baumstruktur nur für identische Kartendaten bei einem identischen Wurzelpunkt möglich ist, ist eine Übereinstimmung der beiden Baumstrukturen innerhalb eines bestimmten Maßes an Abweichungen hinreichend für den erfindungsgemäßen Vergleich der Referenzbaumstruktur mit der Ursprungsbaumstruktur. Somit können die Karteninformationen ausschnittsweise miteinander verglichen werden, um einen bestimmten Streckenabschnitt des Verkehrswegenetzes in beiden Kartendarstellungen zu lokalisieren.

Bevorzugt entsprechen der Ursprungswurzelpunkt und/oder der Referenzwurzelpunkt jeweils einem Punkt des Verkehrswegenetzes. Auf diese Weise wird erreicht, dass alle die Baumstruktur definierenden Punkte auf einer Straße bzw. einem Verkehrsweg liegen.

Damit die Baumstrukturen bezüglich der ersten Karte und der zweiten Karte einfacher miteinander zu vergleichen sind, ist in vorteilhafter Weise vorgesehen, dass die Baumpunkte derart festgelegt werden, dass die den Baumpunkten entsprechenden Punkte des Verkehrsweges einen bestimmten Streckenabstand zu anderen Punkten des Verkehrsweges aufweisen, die den Wurzelpunkten oder anderen, beispielsweise benachbarten Baumpunkten entsprechen.

In vorteilhafter Weise können die Streckenabstände vorbestimmt sein. Alternativ können die Streckenabstände in Abhängigkeit der Länge des Streckenabschnitts bestimmt werden. Hierdurch wird erreicht, dass die Ausdehnung der Baumstruktur jeweils in einer bestimmten Beziehung zu der Ausdehnung des zu identifizierenden Streckenabschnitts steht.

Um auch Parallelfahrbahnen korrekt identifizieren zu können, werden bevorzugt nur Baumpunkte berücksichtigt, die ausgehend von den entsprechenden Wurzelpunkten erreichbar sind. D. h. in diesem Fall werden Abbiegevorschriften, vorgeschriebene Fahrtrichtungen (Einbahnstraße) und weitere Verkehrsvorschriften mit einbezogen.

Ferner ist es vorteilhaft, nur Baumpunkte zu berücksichtigen, die Punkten auf Verkehrswegen bestimmter Verkehrswegeklassen entsprechen. Dies vermeidet eine komplizierte Baumstruktur aufgrund von vielen Baumpunkten auf möglicherweise vorhandenen Nebenstraßen.

Bevorzugt wird die Ursprungsbaumstruktur binär codiert und übertragen. Dies eröffnet die Möglichkeit, die zu übertragende Datenmenge zu reduzieren. Nachfolgend wird die Erfindung unter Bezug auf die beigefügten Zeichnungen beispielhaft näher erläutert, in denen:
- Fig. 1: - eine schematische Skizze zweier Kartendarstellungen zeigt, die miteinander verglichen werden;
- Fig. 2: - schematisch einen Ausschnitt aus einer ersten Karte mit einem ausgewählten Streckenabschnitt zeigt;
- Fig. 3 und 4: - jeweils schematisch einen Ausschnitt aus einer zweiten Karte zur Lokalisierung des Streckenabschnitts aus der Fig. 2 zeigen;
- Fig. 5 bis 5c: - jeweils eine Skizze der Baumstrukturen der Fig. 2 bis 4 zeigen;
- Fig. 6: - schematisch den Ausschnitt der ersten Karte mit einem weiteren Streckenabschnittsbeispiel zeigt; und
- Fig. 7: - den entsprechenden Kartenausschnitt der zweiten Karte zur Lokalisierung des Streckenabschnitts aus Fig. 6 zeigt.

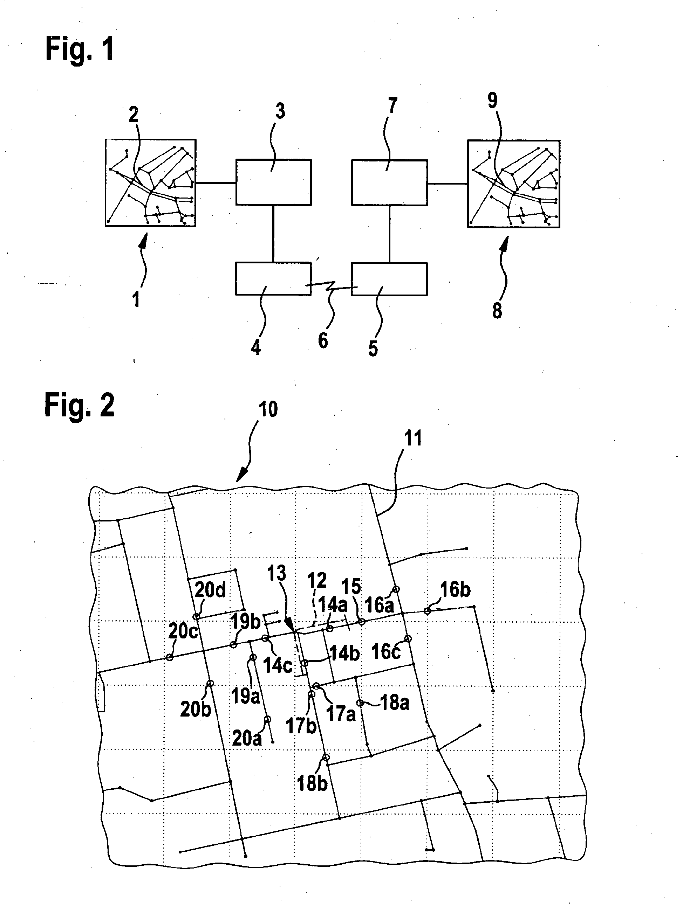

In der Figur 1 ist eine Kattendarstellung 1 gezeigt, in dem sich ein Streckenabschnitt 2 eines Ausschnitts eines Verkehrs- bzw. Straßennetzes befindet, der zu lokalisieren ist. Eine Anwendung 3, beispielsweise eine Verkehrsleitstelle, greift auf die Kartendarstellung 1 zu, beispielsweise um einen Verkehrsstau und/oder eine Baustelle in diesem Streckenabschnitt 2 zu melden. Weitere mögliche Verwendungen des erfindungsgemäßen Verfahrens können die Referenzierung von Points of Interest, beispielsweise die Lage von Restaurants und/oder Hotels, oder die Einfügung neuer Kartendaten in digitalisierte Karten sein. Die Anwendung 3 codiert mit dem nachfolgend beschriebenen erfindungsgemäßen Verfahren die entsprechende Straßeninformation zur Identifizierung des Streckenabschnitts 2 und übergibt die codierten Daten an eine geeignete Sendeeinrichtung 4.

Die Sendeeinrichtung 4 überträgt anschließend die codierten Straßendaten an eine Empfangseinrichtung 5. Die Übertragung, in der Figur 1 dargestellt durch einen gezackten Pfeil 6, kann eine drahtlose Funkübertragung sein, beispielsweise über das digitale Datenübertragungssystem für UKW-Sender RDS (Radio Data System). Ferner ist eine Übertragung über DAB (Digital Audio Broadcasting), Internet oder eine Telekommunikationsverbindung möglich.

Die Empfangsvorrichtung 5 leitet die codierten Daten an die Anwendung 7 weiter, die die empfangenen Daten decodiert. Die Anwendung 7 greift auf eine Straßenkarte 8 zu, um den entsprechenden Streckenabschnitt 9 in dieser Karte 8 zu lokalisieren. Die Anwendung 7 kann beispielsweise ein Navigationssystem sein, das nun in die Lage versetzt ist, die Verkehrsmeldung bei der Routenplanung und Zielführung zu berücksichtigen.

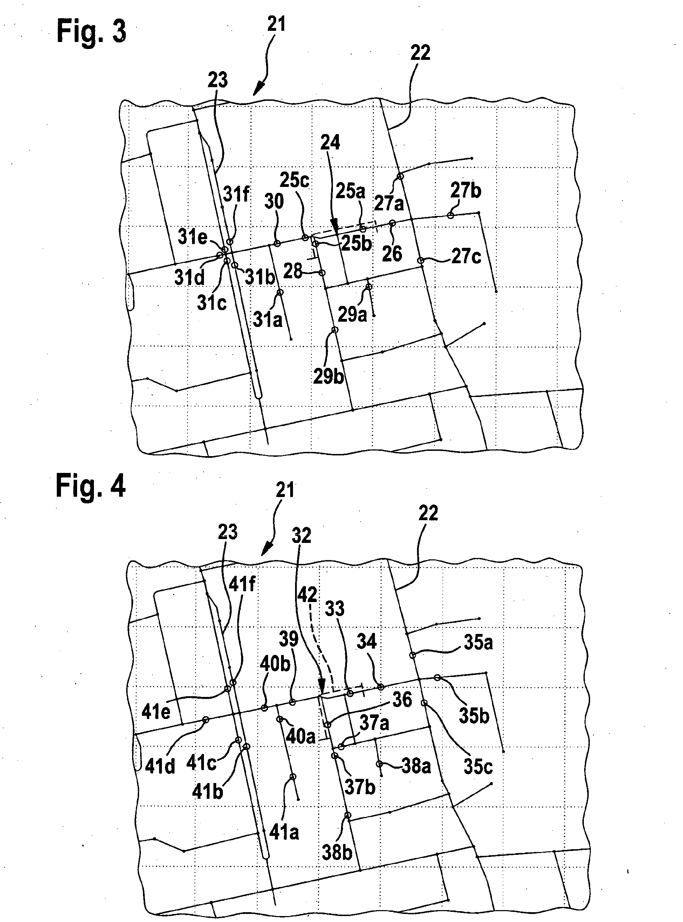

Figur 2 zeigt in einer schematischen und vergrößerten Darstellung einen Ausschnitt einer ersten Karte 10 mit einem Straßennetz 11. In dem Straßennetz 11 ist mit einer Strichlinie ein Streckenabschnitt 12 markiert, der in einer anderen Karte (Fig. 3 bzw. 4) zu lokalisieren ist. Innerhalb des Streckenabschnitts 12 wird zunächst ein Ursprungswurzelpunkt 13 festgelegt, der einer Kreuzung in dem Straßennetz 11 entspricht. Der Ursprungswurzelpunkt 13 sollte bevorzugt auf einer Kreuzung oder zumindest in der Nähe einer Kreuzung liegen, da die Charakteristik der zu erzeugenden Baumstruktur mit der Anzahl der sich kreuzenden Straßen ansteigt. Aber auch jeder andere Punkt auf einer Straße oder abseits davon kann ausgewählt werden.

Ausgehend von dem Ursprungswurzelpunkt 13 wird zunächst ein Baumpunkt 14a festgelegt, der einem Punkt auf dem Straßennetz 11 entspricht, der einen bestimmten Abstand zu dem Ursprungswurzelpunkt 13 aufweist. Anschließend wird ausgehend von dem Baumpunkt 14a in ähnlicher Weise ein Baumpunkt 15 und in der nächsten Stufe die Baumpunkte 16b, 16c und 16a festgelegt. Bei der Auswahl der Baumpunkte werden von einer gedachten Linie nach Norden die Baumpunkte im Uhrzeigersinn nacheinander ausgewählt.

Wenn eine Astlinie an dem letzten Baumpunkt angelangt ist, in diesem Beispiel der Baumpunkt 16a, wird von dem nächst zurückliegenden Baumpunkt, hier der Baumpunkt 15, ein weiterer Baumpunkt im Uhrzeigersinn festgelegt, in diesem Beispiel 16b. Diese Schritte werden wiederholt bis kein weiterer Baumpunkt von dem Baumpunkt 15 zu erreichen ist.

Die Baumpunkte 16a, 16b und 16c entsprechen jeweils Straßenpunkten, die alle den gleichen Abstand zu dem dem Ursprungswurzelpunkt 13 entsprechenden Straßenpunkt aufweisen. Durch eine stufenweise Verbindung von dem Ursprungswurzelpunkt 13 über den Baumpunkt 14a zu den Baumpunkt 15 und anschließend weiter zu den Baumpunkten 16a, 16b und 16c ist ein erster Ast für die Ursprungsbaumstruktur erzeugt.

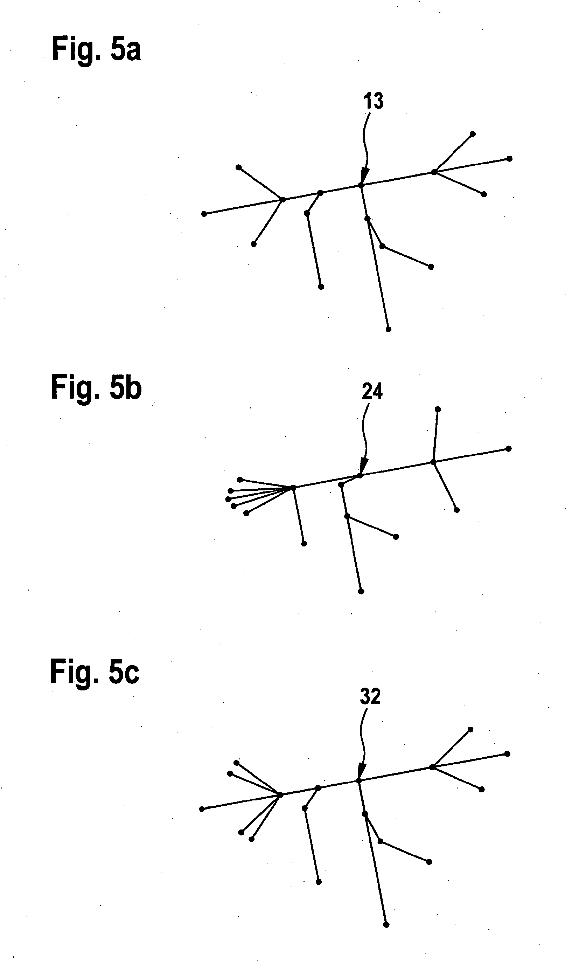

In vergleichbarer Weise wird nun ausgehend von dem Ursprungswurzelpunkt 13 ein zweiter Ast der Baumstruktur mit Baumpunkten 17a und 17b sowie 18a und 18b erzeugt. Ein dritter Ast der entstehenden Baumstruktur weist Baumpunkte 19a und 19b sowie vier abschließende Baumpunkte 20a, 20b, 20c und 20d auf. Die auf diese Weise erzeugte Baumstruktur ist in der Fig. 5a skizziert. Aus Gründen der Übersichtlichkeit ist lediglich der Ursprungswurzelpunkt 13 gekennzeichnet. Die einzelnen Baumpunkte werden ohne Beachtung des zugrunde liegenden Straßennetzes mit einander verbunden, wodurch eine von dem Straßennetz gelöste und abstrahierte Darstellung erhalten wird.

Zum Aufbau der Baumstruktur wird nach der Wahl des Ursprungswurzelpunktes in gewissen Abständen auf abgehende Straßen ein Baumpunkt gesetzt. Die gewählten Abstände können beispielsweise vom Wurzelpunkt aus gemessen in 50 m, 100 m und 200 m liegen. Nun kann die Baumstruktur geeignet codiert werden, indem beispielsweise ausgehend von dem Ursprungswurzelpunkt 13 nacheinander alle Äste bis zu den jeweiligen Endpunkten 16a bis 16c, 18a und 18b sowie 20a bis 20d abgegangen werden und für jeden sich entfernenden Schritt eine 1 und für jeden zu dem Ursprungswurzelpunkt 13 zurückgehenden Schritt eine 0 aufgeschrieben wird.

Dies führt in diesem Beispiel für den Schritt vom Ursprungswurzelpunkt 13 zu dem ersten Baumpunkt 14a zu einer 1 und zweimal zu einer weiteren 1, um über dem Baumpunkt 15 zu dem Baumpunkt 16a zu gelangen. Vom Baumpunkt 16a muss zurück zum Baumpunkt 15 gegangen werden, wofür eine 0 notiert wird. Um nacheinander zu den Baumpunkten 16b und 16c zu gelangen, ist die Folge 101 festgelegt. Mit drei weiteren Schritten zurück, also dreimal hintereinander eine 0, ist wieder der Ursprungswurzelpunkt 13 erreicht. In gleicher Weise werden nun die beiden weiteren Äste abgegangen, bis man letztendlich wieder am Ursprungswurzelpunkt 13 angekommen ist. Die Gesamtfolge ergibt sich in diesem Beispiel zu: 1110101000111001100011100110101000. Dieser String wird zusammen mit den Geokoordinaten des Ursprungswurzelpunktes 13 und eventuell weiteren Attributen und Längenangaben für die Abgrenzung des Streckenabschnitts 12 übertragen.

Figur 3 zeigt einen Ausschnitt einer zweiten Karte 21, der dem Kartenausschnitt 10 aus Figur 2 im Wesentlichen entspricht, aber bei der Darstellung des Straßennetzes 22 Abweichungen zu dem Straßennetz 11 aufweist. So ist die Straße 23 in diesem Kartenausschnitt 21 zweispurig ausgebildet, die in dem Kartenausschnitt 10 der Figur 2 lediglich einspurig dargestellt ist. Weitere Abweichungen beider Straßennetze 11 und 22 sind den entsprechenden Figuren zu entnehmen.

Da die Geokoordinaten des Ursprungswurzelpunktes 13 aus Figur 2 übertragen wurden, wird nun in dem Kartenausschnitt 21 der Figur 3 ein Referenzwurzelpunkt 24 festgelegt, der sich in der Nähe der übermittelten Geokoordinaten befindet. Ausgehend von dem Referenzwurzelpunkt 24 wird nun in der unter Bezug auf Fig. 2 beschriebenen Weise eine zweite Baumstruktur mit Baumpunkten 25a, 25b und 25c aufgebaut, die in etwa Baumpunkten 14a, 14b und 14c der Figur 2 entsprechen.

Ausgehend von dem Baumpunkt 25a wird dieser erste Ast mit den Baumpunkten 26, 27a, 27b und 27c fortgeführt. Der mit dem Baumpunkt 25b beginnende zweite Ast wird mit den Baumpunkten 28, 29a und 29b fortgeführt. Schließlich wird der dritte Ast beginnend mit dem Baumpunkt 25c mit den Baumpunkten 30, 31 a, 31 b, 31 c, 31 d, 31e und 31f fortgeführt. Die erzeugte Baumstruktur ist in der Figur 5b skizziert. Ein Vergleich der Ursprungsbaumstruktur aus Figur 5a mit der Referenzbaumstruktur der Figur 5b ergibt deutliche Abweichungen, so dass keine hinreichende Übereinstimmung der Baumstrukturen erzielt wurde.

In Figur 4 ist wiederum der Kartenschnitt 21 mit dem Straßennetz 22 der Figur 3 gezeigt. In der Figur 4 wird nun ein weiterer Referenzwurzelpunkt 32 auf dem Straßennetz 22 festgelegt, von dem ausgehend eine weitere, dritte Baumstruktur erzeugt wird. Die dritte Baumstruktur weist einen ersten Ast mit Baumpunkten 33, 34 und 35a, 35b und 35c auf. Der zweite Ast weist die Baumpunkte 36, 37a, 37b, 38a und 38b auf. Schließlich weist der dritte Ast die Baumpunkte 39, 40a und 40b sowie 41a, 41b, 41c, 41d, 41e und 41f auf.

Die dritte erzeugte Baumstruktur ist in der Figur 5c skizziert. Ein Vergleich der Baumstruktur der Figur 5c mit der Baumstruktur der Figur 5a zeigt, das die jeweils ersten Äste nahezu identisch und der dritte Ast nur im Endbereich eine geringfügige Abweichung aufweist. Diese Abweichung ist darauf zurückzuführen, dass die Straße 23 in den Figuren 3 und 4 mit zwei Fahrbahnen berücksichtigt wird, wohingegen die entsprechende Straße in der Darstellung der Figur 2 einspurig dargestellt ist.

Anschließend wird der Streckenabschnitt 42 in Bezug auf den Referenzwurzelpunkt 32 in der Figur 4 bestimmt anhand des Bezugs des Streckenabschnitts 12 zu dem Ursprungswurzelpunkt 13 in der Figur 2.

Um bei Straßen mit zwei parallelen Fahrbahnen für entgegen gesetzte Fahrtrichtungen einen nur eine Fahrbahn betreffenden Streckenabschnitt eindeutig identifizieren zu können, kann bei der Erzeugung der Baumstruktur ein Baumpunkt nur dann gesetzt werden, wenn auch bei Berücksichtigung von Abbiegeregeln und anderen Verkehrsvorschriften der entsprechende Punkt der Straße von dem Wurzelpunkt her erreichbar bzw. anfahrbar ist. Zusätzlich kann die Auswahl der Baumpunkte derart eingeschränkt werden, dass bei zunehmender Entfernung von dem Wurzelpunkt nur Straßen einer gleichwertigen oder höheren Straßenklasse berücksichtigt werden. Das vermeidet eine komplizierte Baumstruktur aufgrund kleiner und gegebenenfalls unwichtiger Nebenstraßen.

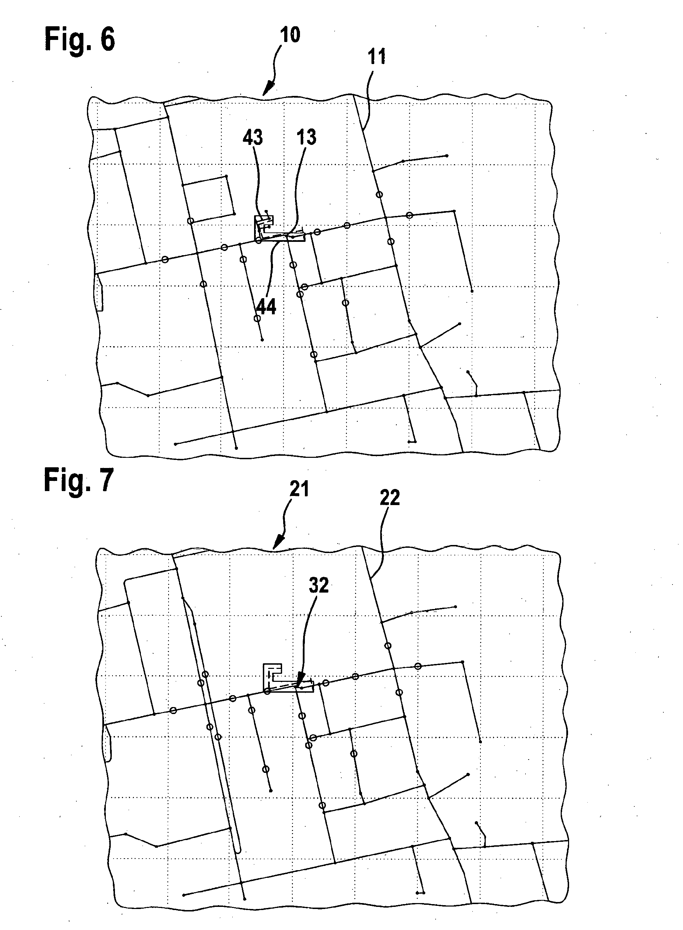

Darüber hinaus kann, falls die referenzierten Streckenabschnitte in der zweiten Karte bzw. der Decoderkarte nicht vorhanden sind, ein Gebiet beispielsweise unter Zuhilfenahme von zu übertragenden Rasterelementen angegeben werden, indem sich der gesuchte Streckenabschnitt befindet. Hierdurch ist eine Ergänzung der Kartendaten auf der Decoder-Seite durch eine Identifizierung der angrenzenden Straßen ermöglicht, ohne dass eine sehr große Datenmenge übertragen werden muss. Diese Ergänzung wird anhand der Figuren 6 und 7 näher erläutert.

In Figur 6 ist der Kartenausschnitt 10 mit dem Verkehrsnetz 11 aus Figur 2 gezeigt. Das Straßennetz 11 weist eine Nebenstraßenanordnung 43 auf, die in etwa F-förmig ist. In der Figur 6 wird wieder ausgehend von dem Ursprungswurzelpunkt 13 eine Baumstruktur erzeugt. Diese Baumstruktur entspricht im Wesentlichen der in Figur 5a skizzierten Baumstruktur. In der Figur 7 ist der Kartenausschnitt 21 mit dem Straßennetz 22 wiedergegeben. Deutlich zu erkennen ist, dass die Nebenstraßenanordnung 43 in der Figur 6 in der Figur 7 nicht vorhanden ist.

Aufgrund der übertragenen Koordinaten des Ursprungswurzelpunktes 13 wird in dem Kartenausschnitt 21 ein Referenzwurzelpunkt 32 bestimmt, von dem ausgehend eine Baumstruktur erzeugt werden kann, die mit der Baumstruktur gemäß Figur 6 hinreichend übereinstimmt. Anschließend kann die in dem Raster 44 vorhandene Karteninformation auf das Straßennetz 22 der Figur 7 gelegt werden. Auf diese Weise ist somit eine Ergänzung der in der Figur 7 dargestellten Karte 21 ermöglicht.

## Patentansprüche

1. Verfahren zur Lokalisierung eines bestimmten Streckenabschnittes (12) aus einer ersten digitalisierten Karte (10) eines Verkehrswegenetzes in einer zweiten digitalisierten Karte (21) des Verkehrswegenetzes, wobei das Verfahren durch ein Navigationssystem durchgeführt wird, mit den Merkmalen:
- Festlegen eines Ursprungswurzelpunktes (13) in Bezug auf den Streckenabschnitt (12) in der ersten Karte (10) und Bestimmung der Koordinaten des Ursprungswurzelpunktes (13);
- Erzeugen einer Ursprungsbaumstruktur ausgehend von dem Ursprungswurzelpunkt (13) aus mehreren Ästen, auf denen Baumpunkte (14a, 15, 16a, 16b, 16c) derart angeordnet sind, dass sie jeweils einem Punkt eines Verkehrsweges in der ersten Karte (10) entsprechen;
- Festlegen eines Referenzwurzelpunktes (24) in der zweiten Karte (21) in der Nähe der Koordinaten des Ursprungswurzelpunktes (13) und Erzeugen einer Referenzbaumstruktur ausgehend von dem Referenzwurzelpunkt (24) aus mehreren Ästen, auf denen Baumpunkte (25a, 25b, 25c, ... 31f) derart angeordnet sind, dass sie jeweils einem Punkt eines Verkehrsweges in der zweiten Karte (21) entsprechen;
- Vergleichen der Ursprungsbaumstruktur und der Referenzbaumstruktur und Festlegen eines weiteren Referenzwurzelpunktes (32), bis eine bestimmte Übereinstimmung der Referenzbaumstruktur mit der Ursprungsbaumstruktur erzielt wird; und
- Bestimmen des Streckenabschnitts (12) in Bezug auf den Referenzwurzelpunkt (24) in der zweiten Karte (21) anhand des Bezugs des Streckenabschnitts zu dem Ursprungswurzelpunkt in der ersten Karte (10), **gekennzeichnet durch**:
- es wird ein Ursprungswurzelpunkt (13) festgelegt, der auf oder in der Nähe einer Kreuzung in dem Straßennetz (11) liegt,
- die Baumpunkte (14a, 15, 16a, 16b, 16c) der Ursprungsbaumstruktur werden als Straßenpunkte festgelegt, wobei eine vom Straßennetz gelöste Darstellung erzeugt wird, indem die einzelnen Baumpunkte ohne Beachtung des zugrundeliegenden Straßennetzes miteinander verbunden werden.

2. Verfahren nach Anspruch 1, **dadurch gekennzeichnet, dass** der Ursprungswurzelpunkt (13) und/oder der Referenzwurzelpunkt (24) jeweils einem Punkt des Verkehrsweges entsprechen.

3. Verfahren nach Anspruch 1 oder 2, **dadurch gekennzeichnet, dass** die Baumpunkte (14a, 15, 16a, 16b, 16c, 25a, 25b, 25c ... 31f) derart festgelegt werden, dass die den Baumpunkten entsprechenden Punkte des Verkehrsweges einen bestimmten Streckenabstand zu den Punkten des Verkehrsweges aufweisen, die den Wurzelpunkten (13, 24) oder anderen Baumpunkten entsprechen.

4. Verfahren nach Anspruch 3, **dadurch gekennzeichnet, dass** die Streckenabstände vorbestimmt sind.

5. Verfahren nach Anspruch 3, **dadurch gekennzeichnet, dass** die Streckenabstände in Abhängigkeit der Länge des Streckenabschnitts (12) bestimmt werden.

6. Verfahren nach einem der vorstehenden Ansprüche, **dadurch gekennzeichnet, dass** nur Baumpunkte (14a, 15, 16a, 16b, 16c, 25a, 25b, 25c ... 31f) berücksichtigt werden, die ausgehend von den entsprechenden Wurzelpunkten (13, 24) erreichbar sind.

7. Verfahren nach einem der vorstehenden Ansprüche, **dadurch gekennzeichnet, dass** nur Baumpunkte (14a, 15, 16a, 16b, 16c, 25a, 25b, 25c ... 31f) berücksichtigt werden, die Punkten auf Verkehrswegen bestimmter Verkehrswegklassen entsprechen.

8. Verfahren nach einem der vorstehenden Ansprüche, **dadurch gekennzeichnet, dass** die Ursprungsbaumstruktur binär codiert und übertragen wird.

9. Verfahren nach einem der vorstehenden Ansprüche, **dadurch gekennzeichnet, dass** die einzelnen Baumpunkte (14a, 15, 16a, 16b, 16c) der Ursprungsbaumstruktur ohne Beachtung des zugrunde liegenden Straßennetzes (11) miteinander verbunden werden.

## Claims

1. Method for localizing a particular road section (12) from a first digitized map (10) of a traffic route network in a second digitized map (21) of the traffic route network, wherein the method is performed by a navigation system, having the features of:
- stipulation of an original root point (13) for the road section (12) in the first map (10) and determination of the co-ordinates of the original root point (13);
- production of an original tree structure starting from the original root point (13) from a plurality of branches on which tree points (14a, 15, 16a, 16b, 16c) are arranged such that they each correspond to a point on a traffic route in the first map (10);
- stipulation of a reference root point (24) in the second map (21) in proximity to the co-ordinates of the original root point (13) and production of a reference tree structure starting from the reference root point (24) from a plurality of branches on which tree points (25a, 25b, 25c, ... 31f) are arranged such that they each correspond to a point on a traffic route in the second map (21) ;
- comparison of the original tree structure and the reference tree structure and stipulation of a further reference root point (32) until a particular match between the reference tree structure and the original tree structure is attained; and
- determination of the road section (12) for the reference root point (24) in the second map (21) on the basis of the relationship of the road section with the original root point in the first map (10),
**characterized in that**:
- an original root point (13) is stipulated that is situated on or in proximity to a junction in the road network (11),
- the tree points (14a, 15, 16a, 16b, 16c) in the original tree structure are stipulated as road points, with a representation that is detached from the road network being produced by virtue of the individual tree points being connected to one another without heed to the underlying road network.

2. Method according to Claim 1, **characterized in that** the original root point (13) and/or the reference root point (24) each correspond to a point on the traffic route.

3. Method according to Claim 1 or 2, **characterized in that** the tree points (14a, 15, 16a, 16b, 16c, 25a, 25b, 25c ... 31f) are stipulated such that the points on the traffic route that correspond to the tree points are at a particular section interval from the points on the traffic route that correspond to the root points (13, 24) or other tree points.

4. Method according to Claim 3, **characterized in that** the section intervals are predetermined.

5. Method according to Claim 3, **characterized in that** the section intervals are determined on the basis of the length of the road section (12).

6. Method according to one of the preceding claims, **characterized in that** only tree points (14a, 15, 16a, 16b, 16c, 25a, 25b, 25c ... 31f) that can be reached from the corresponding root points (13, 24) are considered.

7. Method according to one of the preceding claims, **characterized in that** only tree points (14a, 15, 16a, 16b, 16c, 25a, 25b, 25c ... 31f) that correspond to points on traffic routes in particular traffic route classes are considered.

8. Method according to one of the preceding claims, **characterized in that** the original tree structure is encoded in binary and transmitted.

9. Method according to one of the preceding claims, **characterized in that** the individual tree points (14a, 15, 16a, 16b, 16c) in the original tree structure are connected to one another without heed to the underlying road network (11).

## Revendications

1. Procédé de localisation d'une partie d'itinéraire déterminée (12) à partir d'une première carte numérisée (10) d'un réseau routier de transport dans une seconde carte numérisée (21) du réseau de transport routier, dans lequel le procédé est mis en oeuvre par un système de navigation, comportant les caractéristiques suivantes :
- établir un point racine d'origine (13) par rapport à la partie d'itinéraire (12) dans la première carte (10) et déterminer les coordonnées du point racine d'origine (13) ;
- générer une structure arborescente d'origine partant du point racine d'origine (13) constituée d'une pluralité de branches sur lesquelles des points d'arborescence (14a, 15, 16a, 16b, 16c) sont agencés de manière à ce qu'ils correspondent respectivement à un point d'un trajet de transport dans la première carte (10) ;
- établir un point d'origine de référence (24) dans la seconde carte (21) à proximité des coordonnées du point racine d'origine (13) et générer une structure arborescente de référence partant du point racine de référence (24), constituée d'une pluralité de branches sur lesquelles des points d'arborescence (25a, 25b, 25c, ... 31f) sont agencés de manière à ce qu'ils correspondent respectivement à un point d'un trajet de transport dans la seconde carte (21) ;
- comparer la structure arborescente d'origine à la structure arborescente de référence et établir un autre point racine de référence (32) jusqu'à ce qu'une concordance déterminée soit atteinte entre la structure arborescente de référence et la structure arborescente d'origine ; et
- déterminer la partie d'itinéraire (12) par rapport au point racine de référence (24) dans la seconde carte (21) sur la base du rapport de la partie d'itinéraire au point racine d'origine dans la première carte (10), **caractérisé en ce que** :
- un point racine d'origine (13) qui se situe à l'emplacement ou à proximité d'une intersection dans le réseau routier (11) est établi,
- les points d'arborescence (14a, 15, 16a, 16b, 16c) de la structure arborescente d'origine sont établis en tant que points de routes, dans lequel on génère une représentation séparée du réseau routier en reliant les uns aux autres les points d'arborescence individuels sans tenir compte du réseau routier sous-jacent.

2. Procédé selon la revendication 1, **caractérisé en ce que** le point racine d'origine (13) et/ou le point racine de référence (24) correspondent respectivement à un point du trajet de transport.

3. Procédé selon la revendication 1 ou 2, **caractérisé en ce que** les points d'arborescence (14a, 15, 16a, 16b, 16c, 15a, 15b, 15c, ... 31f) sont établis de manière à ce que les points correspondant aux points d'arborescence du trajet de transport présentent une distance d'itinéraire déterminée par rapport aux points du trajet de transport, lesquels points correspondent aux points racines (13, 24) ou à d'autres points d'arborescence.

4. Procédé selon la revendication 3, **caractérisé en ce que** les distances d'itinéraires sont prédéterminées.

5. Procédé selon la revendication 3, **caractérisé en ce que** les distances d'itinéraires sont déterminées en fonction de la longueur de la partie d'itinéraire (12).

6. Procédé selon l'une quelconque des revendications précédentes, **caractérisé en ce qu'**on ne tient compte que de points d'arborescence (14a, 15, 16a, 16b, 16c, 15a, 15b, 15c, ... 31f) qui peuvent être atteints à partir des points racines correspondants (13, 24).

7. Procédé selon l'une quelconque des revendications précédentes, **caractérisé en ce qu'**on ne tient compte que de points d'arborescence (14a, 15, 16a, 16b, 16c, 15a, 15b, 15c, ... 31f) qui correspondent à des points sur des trajets de transport appartenant à des classes de trajets de transport déterminées.

8. Procédé selon l'une quelconque des revendications précédentes, **caractérisé en ce que** la structure arborescente d'origine est codée et est transmise de manière binaire.

9. Procédé selon l'une quelconque des revendications précédentes, **caractérisé en ce que** les points d'arborescence individuels (14a, 15, 16a, 16b, 16c) de la structure arborescente d'origine sont reliés les uns aux autres sans tenir compte du réseau routier sous-jacent (11).
